# EUROPÄISCHE PATENTSCHRIFT

(11) **EP 1 626 465 B1**
(45) Veröffentlichungstag und Bekanntmachung des Hinweises auf die Patenterteilung: **11.04.2012**
(21) Anmeldenummer: 05015172.9
(22) Anmeldetag: 13.07.2005
(51) Int. Cl.: H01R 13/703, H01R 13/70

(54) **Batteriestecker für Elektrofahrzeug mit Schalter zur Unterbrechung des Ladestroms vor Trennung des Steckers**
Battery connector for electric vehicle with switch for interrupting the charging current before disconnection of connector
Connectuer de batterie pour un véhicule éléctrique comportant un interrupteur pour couper le courant de charge avant de la séparation du connecteur

(30) Priorität: 10.08.2004 DE 102004038680
(43) Veröffentlichungstag der Anmeldung: 15.02.2006
(73) Patentinhaber: Jungheinrich Aktiengesellschaft, 22047 Hamburg (DE)
(72) Erfinder: Maasland, Hans-Hermann Dipl.-Ing., 25451 Quickborn (DE); Opitz, Michael Dipl.-Ing., 23866 Nahe (DE)
(74) Vertreter: Hauck Patent- und Rechtsanwälte

(56) Entgegenhaltungen:
- EP-A- 0 634 818
- DE-A1- 10 151 163
- DE-A1- 19 649 707
- GB-A- 601 959
- US-B1- 6 371 768

## Beschreibung

Die Erfindung bezieht sich auf ein Ladegerät für eine Batterie mit Ladekabel nach dem Patentanspruch 1.

Ein großer Teil der Flurförderzeuge wird mit Batterie betrieben. Es ist naturgemäß erforderlich, die Batterien periodisch aufzuladen. Dies geschieht entweder durch Ausbau der Batterie und Transport zu einer Ladestation oder durch Aufladen im Flurförderzeug, wobei das hierfür erforderliche Ladegerät entweder außerhalb des Flurförderzeugs angeordnet ist oder mit dem Flurförderzeug mitgeführt wird.

Ein typisches Ladegerät verfügt über ein Netzteil, das mit dem normalen Drehstrom- oder Einphasennetz verbindbar ist. Es weist außerdem einen Umformer auf zur Erzeugung eines gewünschten Gleichstroms vorgegebener Spannung. Es ist üblich, daß das Ladegerät über ein Ladekabel mit der Batterie gekoppelt wird. Es ist ferner üblich, der Batterie ein weibliches Steckerteil (Steckbuchse) und dem Ladegerät ein männliches Steckerteil (Stecker) zuzuordnen. Zu Aufladezwecken werden die Steckerteile miteinander verbunden, und es ist mit derzeitigen Ladegeräten üblich, daß die Aufladung der Batterie automatisch in Gang gesetzt wird. Das Ladegerät verfügt hierbei über Mittel, die feststellen, wenn eine Verbindung zur Batterie hergestellt worden ist. Darüber hinaus verfügt das Ladegerät auch über einen manuell betätigbaren Schalter zum Starten der Aufladung und seiner Beendigung.

Wird der Ladestecker des Ladegeräts aus der Steckbuchse der Batterie herausgezogen, muß sichergestellt sein, daß zum Zeitpunkt der Trennung kein Strom vom Ladegerät zur Batterie fließt, da anderenfalls Trennfunken erzeugt werden. Außerdem besteht die Gefahr, daß der Bediener in den Stecker hineinfaßt und Steckerstifte berührt. Er würde einer Spannung ausgesetzt sein, wenn die Steckerstifte nicht abgeschaltet sind.

Aus DE 101 51 163 A1 ist bekannt geworden, zusätzlich zu der üblichen Steckverbindung Pilot- oder Hilfskontakte vorzusehen, die steckerseitig mit einem Steuerteil des Ladegeräts in Verbindung sind. Wird der Stecker aus der Steckbuchse herausgezogen, sprechen die Hilfskontakte zuerst an und bewirken eine Abschaltung des Ladegeräts. Es erweist sich jedoch, daß durch das Ziehen des Steckers nur ein Zeitvorteil im Millisekundenbereich erzielt wird. Wird die Erkennung über einen Prozessor realisiert, der zusätzlich Relais oder Schütze als zeitverzögernde Bauteile bedient, ergibt sich eine noch längere Laufzeit bis zur Abschaltung des Ladegeräts.

Aus DE 196 49 707 A1 ist ein Ladegerät der eingangs genannten Art bekannt geworden, bei dem der Stecker einer Steckverbindung eine von Hand ergreifbare Handhabe aufweist, mit der der Stecker aus der Steckbuchse gezogen wird. Die Handhabe weist einen quer zur Achse des Steckers sich erstreckenden Griffabschnitt auf mit einer Zugseite, auf welche von der Hand eine Zugkraft zum Trennen des Steckers aufgebracht wird. Der Handhabe ist ein Schaltelement zugeordnet, das über eine Signalstrecke mit dem Ladegerät verbunden ist, zur Übertragung eines Abschaltsignals auf das Ladegerät. Das Schaltelement wird mit dem Daumen betätigt. Gleichzeitig wird ein Sperrhebel betätigt, der ein Auseinanderziehen von Steckbuchse und Steckerteil zulässt. Aus GB 601 959A ist bekannt geworden, einen elektrischen Motor wahlweise bei einem Staubsauger oder zum Beispiel einer Waschmaschine einzusetzen.

Der Motor ist mit dem jeweiligen Gerät über eine trennbare Kupplung verbunden. An der Oberseite ist der Motor mit einem Griff versehen, damit der Motor in einer Halterung geschwenkt werden kann, um ihn herauszuheben und von der Kupplung zu trennen. An dem Griff ist ein Schalter angebracht, der den Motor abschaltet, bevor die Kupplung getrennt wird.

Der Erfindung liegt die Aufgabe zugrunde, einen Stecker für das Ladekabel eines Ladegeräts so auszuführen, daß das Ladegerät automatisch ausgeschaltet wird, bevor Steckbuchse und Stecker getrennt sind.

Diese Aufgabe wird durch die Merkmale des Patentanspruchs 1 gelöst.

Bei der Erfindung ist ein Schaltelement auf der Zugseite des Griffabschnitts angeordnet ist, der beim Aufbringen einer Zugkraft auf den Griffabschnitt von Hand betätigt wird. Der hierfür verwendete Schalter ist ein sogenannter Bandschalter. Er paßt sich an die Innenseite des Griffabschnitts an, und der zugehörige Betätigungsabschnitt kann von der ganzen Hand erfaßt werden, da über diesen auch die auf das Gehäuse aufzubringende Zugkraft aufgebracht werden muß.

Bei der Erfindung weist der Stecker eine von Hand ergreifbare Handhabe auf, mit der der Stecker aus der Steckbuchse gezogen wird. Der Handhabe ist ein Schaltelement zugeordnet, das beim Trennen des Steckers manuell betätigt wird. Der Bandschalter ist über eine Signalstrecke mit dem Ladegerät verbunden. Diese Verbindung kann über eine zusätzliche Leitung im Ladekabel erfolgen. Alternativ kann die Signalstrecke von einem Leiter des Ladekabels selbst gebildet sein, wobei eine Übertragung vom Schaltelement auf das Ladegerät über ein hochfrequentes Signal (HF) erfolgt. Es versteht sich, daß der Bandschalter mit einem entsprechenden Sendeelement gekoppelt ist, und das Ladegerät ein entsprechendes Empfangselement aufweist, um entsprechende Impulse über den Leiter des Ladekabels auf das Ladegerät zu übertragen. Schließlich kann auch eine drahtlose Übertragungsstrecke vorgesehen werden, zur Übertragung von Signalen vom Schaltelement auf das Ladegerät, beispielsweise über Funk oder eine IR-Strecke. Auch in diesem Fall bedarf es eines Senders im Stecker und eines Empfängers im Ladegerät zur Übertragung des Signals, daß eine elektrische Trennung von Steckbuchse und Stecker stattgefunden hat. Es ist natürlich auch denkbar, sowohl im Stecker als auch im Ladegerät einen Sender und einen Empfänger anzuordnen, um eine Kommunikation auch in der entgegengesetzten Richtung zu ermöglichen.

Die Erfindung geht von der Erkenntnis aus, daß für die Trennung des Steckers von der Steckbuchse eine gewisse Zugkraft erforderlich ist, die über die Handhabe auf das Gehäuse des Steckers ausgeübt wird. Diese Zugkraft wird dazu verwendet werden, den Bandschalter zu betätigen. Da die Zugkraft zu einem Zeitpunkt aufgebracht wird, an dem die Kontakte von Stecker und Buchse noch längst nicht getrennt sind, kann eine Abschaltung des Ladegeräts zwangsläufig früh stattfinden.

Es ist zwar denkbar, vom Bandschalter am Griffabschnitt eine unmittelbare Verbindung zum Ladegerät vorzusehen. Es ist jedoch vorzuziehen, wenn die Signalstrecke zwischen Steckergehäuse und dem Ladegerät gebildet wird, wie dies bereits oben beschrieben ist. In diesem Fall ist ein Hilfskabel zwischen dem Schalter und dem Steckergehäuse vorgesehen, um das vom Schalter erzeugte Signal zunächst in das Steckergehäuse zu übertragen und von dort anschließend auf das Ladegerät.

Ein Ausführungsbeispiel der Erfindung wird nachfolgend näher erläutert.

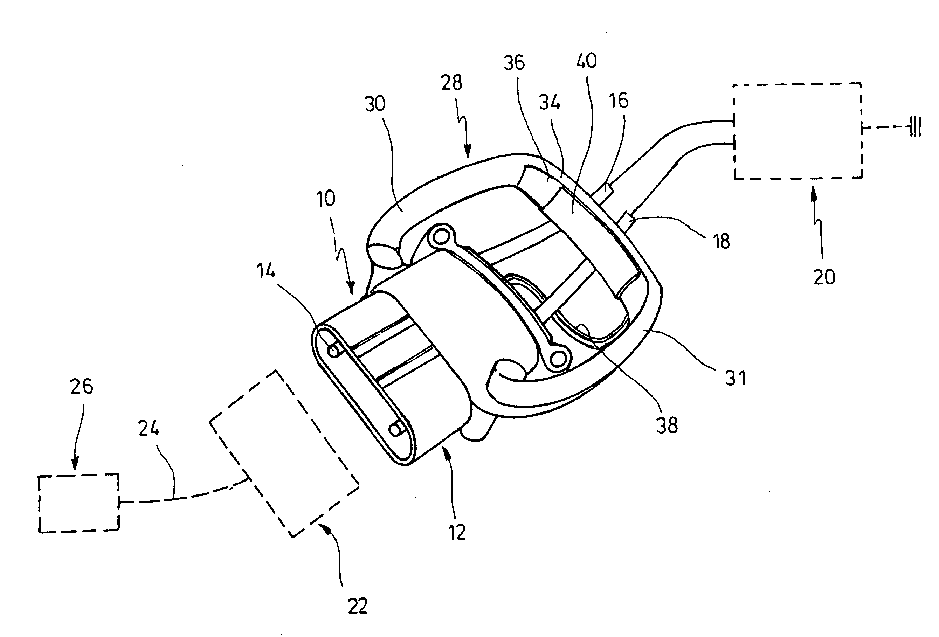

Die einzige Figur zeigt perspektivisch einen Stecker eines Ladekabels für ein Ladegerät nach der Erfindung.

In der Figur ist ein Stecker allgemein mit 10 bezeichnet. Er weist ein Steckergehäuse 12 auf, die am in der Figur linken Ende drei Steckerstifte 14 aufnimmt. Die äußeren Steckerstifte 14 dienen zur Leistungsübertragung. Die Steckerstifte 14 sind mit Leistungskabeln 16, 18 verbunden, die am in der Figur rechten Ende des Gehäuses 12 herausgeführt sind. Sie sind mit einem gestrichelt gezeichneten Ladegerät 20 verbunden. Das Ladegerät liegt an Netzspannung.

Der Stecker 10 wirkt mit einer schematisch dargestellten Steckbuchse 22 zusammen, die über ein Kabel 24 mit einer gestrichelt gezeichneten Batterie 26 verbunden ist. Soweit gleichen die beschriebenen Teile üblichen Systemen.

In der Figur ist zu erkennen, daß mit dem Gehäuse 12, das im Querschnitt allgemein oval geformt ist, ein U-förmiger Griff 28 verbunden ist. Die Schenkel 30, 31 sind seitlich am Gehäuse 12 angebracht. Sie können mit dem Gehäuse in geeigneter Weise verschraubt werden. Eine einteilige Ausbildung des Griffs 28 mit dem Gehäuse 12 aus Kunststoffinaterial ist gleichfalls denkbar. Der Steg 34 des Griffs 28 erstreckt sich annähernd quer zur Längsachse des Gehäuses 12 und ist leicht nach außen gebogen. Auf der Innenseite ist ein Streifen 36 angebracht, der sich der Kontur des Griffabschnitts 34 anpaßt und der im mittleren Bereich einen Schaltkontakt trägt, der mit einem Hilfskabel 38 verbunden ist. Ein zweiter Schaltkontakt ist durch ein längliches Teil 40 gebildet, das sich annähernd in der Mitte des Griffabschnitts 34 über seine größte Länge erstreckt und wiederum an dessen Kontur angepaßt ist. Es ist in geeigneter Weise gelagert (nicht gezeigt) und vorgespannt, so daß der gebildete Schalter normalerweise in Öffnungsstellung ist. Wird auf den Streifen 40 eine Kraft ausgeübt, indem eine Bedienungsperson den Griffabschnitt 34 erfaßt und in der Figur nach rechts zieht, wird der Schalter geschlossen. Es handelt sich um einen Bandschalter, wie er in der Sicherheitstechnik, im Automobilbau usw. üblich ist.

Der Schalter ist über das Hilfskabel 38 mit dem Inneren des Gehäuses 12 verbunden. Von dort erfolgt eine Übertragung des Zustands des Schalters über eine nicht weiter dargestellte Signalstrecke zum Ladegerät. Die Signalstrecke kann z.B. durch ein zusätzliches Kabel bzw. einen zusätzlichen Leiter in einem der Kabel 16, 18 gebildet sein. In diesem Fall ist eine entsprechende Schaltung im Ladegerät 20 über den Schalter wahlweise kurzgeschlossen oder geöffnet. Alternativ ist möglich, zwischen dem Gehäuse 12 und dem Ladegerät 20 eine drahtlose Signalstrecke einzurichten oder eine Übertragung über HF über einen der Leiter der Kabel 16, 18 vorzunehmen.

## Patentansprüche

1. Ladegerät für eine Batterie, weiterhin umfassend ein Ladekabel (16, 18) und einer Stecker (10), das über das Ladekabel (16,18) mit dem Stecker (10) verbunden ist, der mit einer mit der Batterie (26) verbundenen Steckbuchse (22) zusammenwirkt, wobei der Stecker ein Steckergehäuse (12) aufweist, in dem mit dem Ladckabel (16, 18) verbundene Stcckerstifte (14) angeordnet sind und wobei der Stecker (10) eine von Hand ergreifbare Handhabe (28) aufweist, mit der der Stecker (10) aus der Steckbuchse (22) gezogen wird, wobei die Handhabe (28) einen sich quer zur Achse des Steckers erstreckenden Griffabschnitt aufweist mit einer Zugseite, auf welche von der Hand eine Zugkraft zum Trennen des Steckers (10) aufgebracht wird und der Handhabe ein Schaltelement zugeordnet ist, das über eine Signalstrecke mit dem Ladegerät (20) verbunden ist, zur Übertragung eines Abschattsignals auf das Ladegerät (20), **dadurch gekennzeichnet, dass** das Schaltelement ein Bandschalter (36, 40) ist, der Zugseite der Handhabe (28) so angeordnet ist, dass er betätigt wird, wenn eine Zugkraft auf die Handhabe (28) zwecks Trennung von Stecker (10) und Steckbuchse (22) aufgebracht wird.

2. Ladegerät nach Anspruch 1, **dadurch gekennzeichnet, daß** die Signalstrecke von einer zusätzlichen Leitung im Ladekabel gebildet ist.

3. Ladegerät nach Anspruch 1, **dadurch gekennzeichnet, daß** die Signalstrecke von einem Leiter des Ladekabels gebildet und das Signal vom Schaltelement über HF auf das Ladegerät (20) übertragen wird.

4. Ladegerät nach Anspruch 1, **dadurch gekennzeichnet, daß** eine drahtlose Übertragungsstrecke zwischen dem Stecker (10) und dem Ladegerät (20) vorgesehen ist und dem Stecker (10) und dem Ladegerät (20) jeweils ein Sender/Empfänger zugeordnet ist.

5. Ladegerät nach einem der Ansprüche 1 bis 4, **dadurch gekennzeichnet, daß** die Signalstrecke zwischen dem Steckergchäuse und dem Ladegerät gebildet ist und das Schaltelement über ein Hilfskabel (38) mit dem Gehäuse (12) verbunden ist.

6. Ladegerät nach einem der Ansprüche 1 bis 5, **dadurch gekennzeichnet, daß** die Handhabe von einem U-förmigen bügelartigen Griff (28) gebildet ist, dessen Schenkel (30, 31) mit dem Steckergehäuse (12) verbunden sind.

7. Ladegerät nach einem der Ansprüche 1 bis 6, **dadurch gekennzeichnet, daß** der Steg (34) des U-förmigen Griffs (28) den Griffabschnitt bildet.

## Claims

1. Charger for a battery further comprising a charging cable (16, 18) and a plug (10), which is connected to the plug (10) via the charging cable (16, 18) and which cooperates with a socket (22) connected to the battery (26), the plug comprising a plug housing (12) in which plug pins (14) connected to the charging cable (16, 18) are arranged and the plug (10) comprises a hand grippable handle (28) with which the plug (10) is pulled out of the socket (22), wherein the handle (28) comprises a grip portion extending transversely to the axis of the plug with a pulling side on which a pulling force for disconnecting the plug (10) is applied manually and a switching element is assigned to the handle, wherein the switching element is connected to the charger (20) via a signal path for the transmission of a switch-off signal to the charger (20), **characterised in that** the switching element is a wave switch (36, 40), which is arranged on the pulling side of the handle (28) so that it is actuated, when a pulling force is applied onto the handle (28) for the separation of the plug (10) and the socket (22).

2. Charger according to claim 1, **characterised in that** the signal path is formed by an additional line in the charging cable.

3. Charger according to claim 1, **characterised in that** the signal path is formed by a conductor of the charging cable and the signal is transmitted via HF from the switching element to the charger (20).

4. Charger according to claim 1, **characterised in that** a wireless transmission link is provided between the plug (10) and the charger (20) and one respective transmitter/receiver is associated with the plug (10) and the charger (20).

5. Charger according to one of the claims 1 to 4, **characterised in that** the signal path is formed between the plug housing and the charger and the switching element is connected to the housing (12) via an auxiliary cable (38).

6. Charger according to one of the claims 1 to 5, **characterised in that** the handle is formed by a U-shaped stirrup-like grip (28), the branches (30, 31) of which being connected to the plug housing (12).

7. Charger according to one of the claims 1 to 6, **characterised in that** the web (34) of the U-shaped grip (28) forms the grip portion.

## Revendications

1. Dispositif de chargement d'une batterie comprenant en outre un câble de chargement (16, 18) et un connecteur (10), qui est relié par le câble de chargement (16, 18) au connecteur (10), qui coopère avec une fiche femelle (22) reliée à la batterie (26), le connecteur comportant un boîtier de connexion (12) dans lequel sont disposées des douilles mâles (14) reliées au câble de chargement (16, 18), et le connecteur (10) comprenant une manette (28) saisissable par la main, avec laquelle le connecteur (10) est tiré hors de la fiche femelle (22), la manette (28) présentant une partie de préhension s'étendant transversalement à l'axe du connecteur avec un côté tirant sur lequel est appliquée manuellement une force de traction pour séparer le connecteur (10), et un élément de commutation, qui est relié au dispositif de chargement (20) par une liaison de signalisation, est associé à la manette, pour transmettre un signal d'arrêt au dispositif de chargement (20), **caractérisé en ce que** l'élément de commutation est un commutateur de gammes d'ondes (36, 40) qui est agencé sur le côté tirant de la manette (28) de telle sorte qu'il est actionné lorsqu'une force de traction est appliquée sur la manette (28) à des fins de séparation du connecteur (10) et de la fiche femelle (22).

2. Dispositif de chargement selon la revendication 1, **caractérisé en ce que** la liaison de signalisation est formée par une ligne supplémentaire dans le câble de chargement.

3. Dispositif de chargement selon la revendication 1, **caractérisé en ce que** la liaison de signalisation est formée par un conducteur du câble de chargement et le signal est transmis au dispositif de chargement (20) par l'élément de commutation via la haute fréquence.

4. Dispositif de chargement selon la revendication 1, **caractérisé en ce qu'**une liaison de transmission sans fil est prévue entre le connecteur (10) et le dispositif de chargement (20), et **en ce qu'**un émetteur/récepteur est associé respectivement au connecteur (10) et au dispositif de chargement (20).

5. Dispositif de chargement selon une des revendications 1 à 4, **caractérisé en ce que** la liaison de signalisation est formée entre le boîtier de connexion et le dispositif de chargement et l'élément de commutation est relié par un câble de secours (38) au boîtier (12).

6. Dispositif de chargement selon une des revendications 1 à 5, **caractérisé en ce que** la manette est formée par une poignée (28) en forme d'étrier en U dont les montants (30, 31) sont reliés au boîtier de connexion (12).

7. Dispositif de chargement selon une des revendications 1 à 6, **caractérisé en ce que** l'arête (34) de la poignée en U (28) forme la partie de préhension.
